# EUROPÄISCHE PATENTSCHRIFT

(11) **EP 1 829 180 B1**
(45) Veröffentlichungstag und Bekanntmachung des Hinweises auf die Patenterteilung: **15.08.2018**
(21) Anmeldenummer: 05826438.3
(22) Anmeldetag: 23.12.2005
(51) Int. Cl.: H02G 3/22, G02B 6/44

(54) **DRUCKBEAUFSCHLAGBARE VORRICHTUNG MIT EINER FLUIDDICHTEN LEITUNGSDURCHFÜHRUNG**
PRESSURIZABLE DEVICE WITH A SEALED CABLE FEEDTHROUGH
DISPOSITIF PRESSURISABLE AVEC UNE TRAVERSÉE DE CÂBLES ÉTANCHE

(30) Priorität: 23.12.2004 EP 04030602
(43) Veröffentlichungstag der Anmeldung: 05.09.2007
(73) Patentinhaber: MAN Diesel & Turbo SE, 86153 Augsburg (DE)
(72) Erfinder: SUTER, Roger, CH-8050 Zürich (CH); KLEYNHANS, George, CH-8180 Bülach (CH); ORTMANN, Peter, CH-8200 Schaffhausen (CH)
(86) Internationale Anmeldenummer: PCT/EP2005/057169
(87) Internationale Veröffentlichungsnummer: WO 2006/069987

(56) Entgegenhaltungen:
- GB-A- 2 217 871
- US-A- 2 605 315
- US-A- 3 998 515

## Beschreibung

Die Erfindung betrifft druckbeaufschlagbare Vorrichtung gemäss dem Oberbegriff von Anspruch 1, wie aus Dokument US-A-3 998 515 bekannt. Es ist bekannt, elektrische Leitungen durch die Wand eines Druckbehälters zu führen, um beispielsweise innerhalb des Druckbehälters angeordnete Antriebsmittel von aussen mit elektrischer Energie zu versorgen, oder um beispielsweise mit Hilfe von Überwachungs-, Steuer- oder Regelleitungen einen Datenaustausch zu den im Innern des Druckbehälters angeordneten Sensoren und Aktuatoren zu ermöglichen. So können beispielsweise bei einem Turbokompressor der gesamte Kompressor sowie die Antriebsvorrichtung innerhalb eines Druckbehälters angeordnet sein. Zur Energieversorgung, sowie zur Ansteuerung und Überwachung des Turbokompressors und des Motors ist eine Vielzahl von durch die Wand des Druckbehälters verlaufenden Leitungen erforderlich, insbesondere wenn die rotierenden Teile mit Hilfe von Magnetlagern berührungslos gelagert sind.

Nachteilig an bekannten Leitungsdurchführungen, welche bei unter Druck stehenden Gehäusen verwendet werden, ist die Tatsache, dass bei den Leitungsdurchführungen eine Leckage auftreten kann, sodass beispielsweise Gas unkontrolliert nach Aussen strömt.

Gefährlich wird dies insbesondere, wenn in gewissen Anlageteilen unbemerkt ein Druckaufbau erfolg und diese unter einem unerwartet hohen Druck stehen, oder wenn als Folge des Gasaustrittes eine Explosionsgefahr entsteht. Das Dokument GB 2217871 offenbart eine derartige Leitungsdurchführung, in welcher sich während dem Betrieb unbemerkt ein Druck aufbauen kann.

Es ist Aufgabe der vorliegenden Erfindung eine sichere und kostengünstige Leitungsdurchführung vorzuschlagen, welche für druckbeaufschlagbare Räume geeignet ist.

Diese Aufgabe wird gelöst mit einer druckbeaufschlagbaren Vorrichtung aufweisend die Merkmale von Anspruch 1. Die Unteransprüche 2 bis 17 betreffen weitere, vorteilhafte Ausgestaltungen.

Die Aufgabe wird insbesondere gelöst mit einer fluiddichten Leitungsdurchführung, die einen Leiter in einen druckbeaufschlagbaren Raum führt, wobei die Leitungsdurchführung ein Gehäuse, zumindest einen Leiter sowie eine erste und eine zweite druckbelastbare Dichtung umfasst, wobei die zwei druckbelastbaren Dichtungen und das Gehäuse einen Innenhohlraum begrenzen, wobei der Leiter über die erste Dichtung in den Innenhohlraum eintritt, durch den Innenhohlraum verläuft, und über die zweite Dichtung aus dem Innenhohlraum austritt, und wobei der Innenhohlraum eine Druckentlaslungsöffnung aufweist, welche in einen Aussenraum mündet, der sich ausserhalb des druckbeaufschlagbaren Raumes befindet.

Die erfindungsgemässe druckbeaufschlagbare Vorrichtung weist den Vorteil auf, dass bei einer Leckage einer Dichtung die aus dem druckbeaufschlagbaren Raum durch die Dichtung strömenden Gase in den Innenhohlraum der Leitungsdurchführung fliessen und von diesem Innenhohlraum über die Druckentlastungsöffnung kontrolliert in einen Aussenraum abgegeben werden. Dadurch ist einerseits sichergestellt, dass das in die Leitungsdurchführung einströmende Leckagegas keinen unkontrollierten Druckaufbau in der Leitungsdurchführung bewirkt. Andererseits ist sichergestellt, dass das einströmende Leckagegas kontrolliert einem definierten Aussenraum zugeführt wird. Durch diese kontrollierte Abführung des Gases bleibt die gesamte Leitungsdurchführung fluiddicht. Zudem ist eine Explosionsgefahr ausgeschlossen.

Die Leitung in der Leitungsdurchführung ist vorzugsweise als elektrischer Leiter, insbesondere als stabförmiger elektrischer Leiter ausgestaltet. Der Leiter kann jedoch auch als Lichtwellenleiter ausgestaltet sein.

In einer bevorzugten Ausführungsform ist die Leitungsdurchführung als Steckverbindung ausgestaltet, umfassend ein erstes und zweites Gehäuseteil mit je einem Leiter, welche im eingesteckten Zustand miteinander verbunden sind, insbesondere elektrisch leitend verbunden sind. Die Steckverbindung kann beispielsweise einen einzigen Leiter, oder auch eine Mehrzahl sich gegenseitig verbindender Leiter aufweisen. Die Leiter können beispielsweise zur Übertragung von Steuersignalen im Bereich von mV bis V oder mA ausgelegt sein. Die Leiter könnten auch zur Energieversorgung, beispielsweise von innerhalb des Gehäuses angeordneten Motoren, ausgelegt sein, und somit zur Übertragung von Strömen und/oder Spannungen im Bereich von kA und kV ausgelegt sein. Die erfindungsgemässe fluid- bzw. gasdichte Leitungsdurchführung ist insbesondere für Anwendungsgebiete mit Differenzdrücke im Bereich zwischen 5 Bar und 500 Bar geeignet.

Die erfindungsgemässe druckbeaufschlagbare Vorrichtung ist beispielsweise in Kombination mit Turbokompressoren, insbesondere mit magnetgelagerten Turbokompressoren, geeignet, bei welchen der gesamte elektrische Antriebsmotor sowie alle Kompressorstufen in einem gemeinsamen Druckgehäuse angeordnet sind. Bei einem derartigen Turbokompressor sind eine Mehrzahl von Energie- und Steuerleitungen mit Leitungsdurchführungen durch das Druckgehäuse zu leiten. Für einen langfristigen, wartungsarmen und sicheren Betrieb eines derartigen Turbokompressors sind die Leitungsdurchführungen besonders geeignet.

Die Erfindung wird nachfolgend mit Hilfe von Figuren an Hand unterschiedlicher Ausführungsbeispiele beschrieben. Es zeigen:
- Fig. 1: einen Längsschnitt durch eine Leitungsdurchführung;
- Fig. 2: einen Längsschnitt durch ein zweites Ausführungsbeispiel einer Leitungsdurchführung;
- Fig. 3: eine Ansicht aus Richtung A auf eine mehrpolige, als Steckverbindung ausgestalteten Leitungsdurchführung;
- Fig. 4: einen Längsschnitt durch ein drittes Ausführungsbeispiel einer Leitungsdurchführung;
- Fig. 5: einen Schnitt (B-B) durch ein weiteres Ausführungsbeispiel einer Leitungsdurchführung;
- Fig. 6: schematisch einen Druckbehälter mit einer Leitungsdurchführung;
- Fig. 7: schematisch einen Druckbehälter mit einer weiteren Leitungsdurchführung.

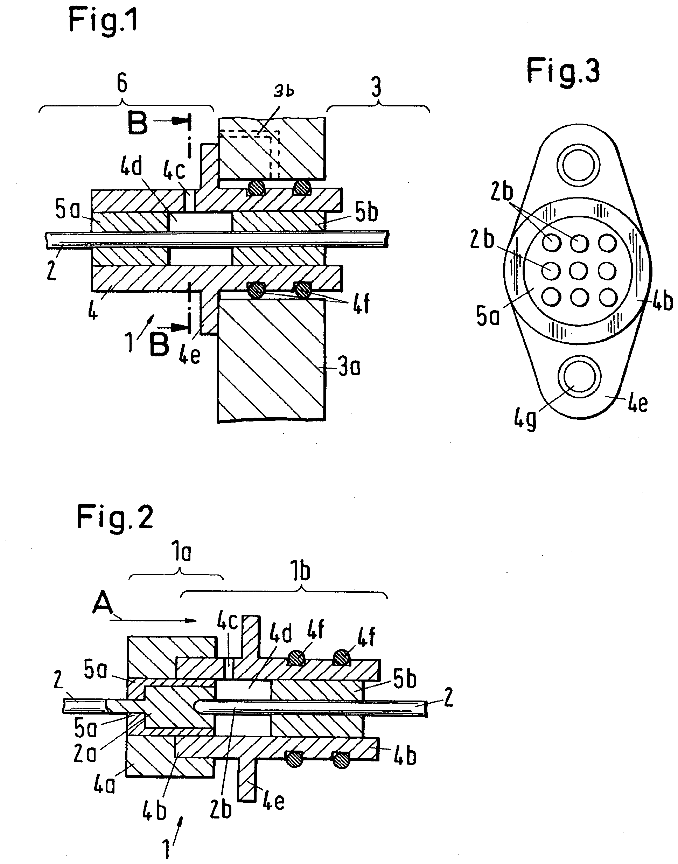

Figur 1 zeigt eine einstückig ausgestaltete Leitungsdurchführung 1 umfassend ein Gehäuse 4 mit Befestigungsflansch 4e, Innenraum 4d und Druckentlastungsöffnung 4c. Die Leitungsdurchführung 1 umfasst zudem einen elektrischen Leiter 2, sowie eine erste und zweite Dichtung 5a, 5b, durch welche der Leiter 2 verläuft. Die zweite Dichtung 5b wird nachfolgend auch als primäre Dichtung oder Hauptdichtung bezeichnet. Die erste Dichtung 5a wird nachfolgend auch als sekundäre Dichtung bezeichnet. Diese zwei Dichtungen 5a, 5b sind derart angeordnet, dass sie gemeinsam mit der Wand des Gehäuses 4 einen Innenhohlraum 4d begrenzen, welcher als einzige Öffnung eine durch die Gehäusewand verlaufende, nicht verschlossene (im Englischen auch als "non sealed" bezeichnet), permanent fluid- oder gasdurchlässige Druckentlastungsöffnung 4c aufweist. Im dargestellten Ausführungsbeispiel ist der Leiter 2 als Elektroleiter, insbesondere als metallischer Stab ausgestaltet. In diesem Ausführungsbeispiel bestehen die zwei Dichtungen 5a, 5b aus einem elektrisch isolierenden Material wie Kunststoff oder Keramik. Der Leiter 2 könnte auch von einer Isolationsschicht umgeben sein oder als isolierter Leiterdraht ausgestaltet sein. Der Leiter 2 könnte beispielsweise auch aus einem Lichtwellenleiter aus Glasfaser bestehen. Die zwei Dichtungen 5a, 5b könnten dabei auch aus einem elektrisch leitenden Material, beispielsweise aus Metall bestehen. Diese Dichtungen bilden gleichzeitig eine Druckbarriere.

Zumindest die Dichtung 5b ist druckbelastbar ausgestaltet und muss den zwischen dem Innenraum 3 und dem Innenhohlraum 4d anliegenden Differenzdruck aushalten. In einer bevorzugten Ausführungsform entspricht der Druck im Innenhohlraum 4d ungefähr einem Bar. Der Druck im Innenholraum 4d kann, abhängig von der durch die zweite Dichtung 5b strömenden Leckagemenge, Werte bis zum Druckniveau des Innenraums 3 annehmen. Daher ist die erste druckbelastbare Dichtung 5a vorzugsweise derart ausgestaltet, dass diese in der Lage ist den Druck des Innenraumes 3 aufzunehmen. Der Druck im Innenraum 3 kann, je nach Anwendung, bis zu 500 Bar betragen. Wird die Dichtung 5b aus irgendwelchen Gründen undicht, so dringt das Fluid, vorzugsweise Gas, aus dem Innenraum 3 in den Innenhohlraum 4d, und wird danach über die Öffnung 4c entsorgt. Das aus der Öffnung 4c austretende Gas strömt in einen Aussenraum 6, der sich ausserhalb des druckbeaufschlagbaren Raumes 3 befindet. In einer vorteilhaften Ausgestaltung ist die Öffnung 4c über eine Fluid fördernde Leitung mit der Atmosphäre verbunden, sodass das austretende Gas der Atmosphäre zugeleitet wird, sodass auch bei undichter Dichtung 5b eine fluiddichte Leitungsdurchführung 1 zwischen dem Innenraum 3 und dem in Figur 1 dargestellten Aussenraum 6 besteht.

Die Leitungsdurchführung 1 wird vorzugsweise in Kombination mit einem Druckgehäuse 3a verwendet. Figur 1 zeigt schematisch eine Druckgehäuse 3a mit druckbeaufschlagbarem Innenraum 3, wobei das Druckgehäuse 3a eine kreisförmige Durchbrechung aufweist, in welcher die zylinderförmige Leitungsdurchführung 1 angeordnet ist. Zwei Dichtungsringe 4f dichten den Spalt zwischen Druckgehäusewand 3a und Gehäuse 4 ab, sodass der Leiter 2 fluiddicht, insbesondere gasdicht vom Innenraum 3 in den sich ausserhalb des Druckgehäuses befindlichen Aussenraum 6 geführt ist. In einer vorteilhaften Ausgestaltung kann zwischen den Dichtungsringen 4f eine Fluid leitende Verbindung 3b zum Aussenraum 6, einem sonstigen Raum oder zur Atmosphäre vorgesehen sein. Diese in Figur 1 nur strichliert dargestellte Bohrung 3b dient der Druckentlastung, um einen übermässigen Druck im Raum zwischen den Dichtungsringen 4f zu verhindern, welcher auf Grund einer Leckage des rechts angeordneten Dichtungsringes 4f entstehend könnte. Das durch die Bohrung 3b strömende Fluid wird vorteilhafterweise kontrolliert abgeführt, indem die Bohrung in strömungsbeeinflussende Mittel wie Ventile und Leitungen münden, welche eine kontrollierte Druckentlastung erlauben. Das Gehäuse 4 kann auf unterschiedliche Weite mit dem Druckgehäuse 3a verbunden sein, zum Beispiel durch Schweissen oder Löten.

Figur 2 zeigt in einem Längsschnitt eine weitere Leitungsdurchführung 1, welche im Unterschied zu der in Figur 1 dargstellten Ausführungsform als Steckverbindung ausgestaltet ist. Die Steckverbindung umfasst ein erstes Steckverbindungsteil 1a und ein zweites Steckverbindungsteil 1b, welche gegenseitig lösbar sind. Das zweite Steckverbindungsteil 1b mit zweiten Gehäuseteil 4b wird beispielsweise über den Flansch 4e, wie in Figur 1 dargestellt, fest mit dem Druckgehäuse 3a verbunden. Das erste Steckverbindungsteil 1a umfasst einen weiblichen Leiterverbinder 2a, welcher über eine erste Dichtung 5a mit dem ersten Gehäuseteil 4a verbunden ist. Im Innenhohlraum 4d ist ein männlicher Leiterverbinder 2b angeordnet, wobei diese beiden Leiterverbinder 2a, 2b beziehungsweise die beiden Gehäuseteile 4a, 4b steckbar verbindbar sind. Zwischen den beiden Gehäuseteilen 4a, 4b können weitere, nicht dargestellte Befestigungselemente wie Gewinde oder Sicherungselemente angeordnet sein, um eine feste oder gesicherte Verbindung der beiden Gehäuseteile 4a, 4b zusätzlich zu gewährleisten.

Die in Figur 2 dargestellte Steckverbindung 1 weist eine Druckentlastungsöffnung 4c auf, sodass sich, falls die druckbelastbare Dichtung 5b geringfügig undicht wird, im Innenhohlraum 4d kein unkontrollierter Druck aufbauen kann. Sollte die zweite druckbelastbare Dichtung 5b eine grosse Leckage aufweisen, so baut sich, insbesondere bei kleiner Druckentlastungsöffnung 4c, im Innenhohlraum 4d ein Druck auf, sodass es in diesem Fall besonders wichtig ist, dass die erste Dichtung 5a möglichst bis zu dem im Innenraum 3 anliegenden Druck belastbar ist.

Die Leitungsdurchführung 1 kann, wie in Figur 2 dargestellt, zur Durchführung eines einzigen Leiters 2 ausgestaltet sein.

Figur 3 zeigt in einer Ansicht aus Richtung A, in Figur 2 dargestellt, ein zweites Gehäuseteil 4b mit insgesamt neun metallischen, männlichen Leiterverbindern 2b, welche in einer elektrisch isolierenden Dichtung 5b angeordnet und gehalten sind. Das zweite Gehäuseteil 4b ist mit Hilfe eines Flanschs 4e mit Bohrungen 4g an der Aussenwand des Druckgehäuses 3a befestigbar. Die Leitungsdurchführung 1, wie in Figur 2 als Steckverbindung ausgestaltet oder wie in Figur 1 als Durchführung ausgestaltet, kann einen oder bei entsprechender Ausgestaltung eine beliebige Vielzahl von Leitern 2 aufweisen.

Grundsätzlich kann jede drucktragende Leitungsdurchführung 1 versagen, mit der Folge einer unter Umständen unkontrollierten Gasleckage.

Das primäre drucktragende Dichtungselement 5b ist bei einer Steckverbindung im nicht beweglichen Steckverbindungsteil 1b fest am Druckbehälter 3a montiert. Jedes Dichtungselement 5b kann eine oder eine Vielzahl von Leiterdurchführungen aufweisen. Das bewegliche Steckverbindungsteil 1a ist mit einem Kabel verbunden, welches einen oder eine Vielzahl von Leitern 2 beziehungsweise Strängen aufweisen kann, welche aus einer Vielzahl von Litzen bestehen können. Der unbewegliche und der bewegliche Teil der Steckverbindung 1a, 1b sind im Betriebszustand fest und dicht miteinander verbunden und bilden ein umschlossenes Volumen 4d in ihrem Inneren.

Die Leitungsdurchführung vermeidet, dass, sollte das primäre drucktragende Dichtungselement 5b versagen, im umschlossenen Volumen 4d der Steckverbindung 1a, 1b ein Druckaufbau stattfinden. Dieser Druckaufbau würde ansonst dazu führen, dass insbesondere bei unsachgemässem Zusammenbau des beweglichen Teils der Steckverbindung 1b Gas entlang der Leiterlitzen durch das Kabel in nicht entsprechend zertifizierte Zonen migrieren kann. Um diese Sekundärleckage zu vermeiden, ist der bewegliche Teil des Steckers 1a mit einer zweiten drucktragenden Barriere 5a ausgerüstet. Die Leiterdurchführungen in den Steckverbindungsteilen 2a, 2b sind vorzugsweise aus massiven Stäben ausgebildet, insbesondere um die bei der Verwendung von Litzendraht als Leiter 2 mögliche Leckage zu vermeiden.

Das Versagen der primären Dichtung 5b kann unterschiedliche Verläufe annehmen. Einerseits ist, bedingt durch beispielsweise Temperaturschwankungen und damit verbundenen inneren Spannungen, ein schleichender Verlust der Dichtfunktion denkbar. Andererseits kann beispielsweise durch Einwirkung äusserer mechanischer Kräfte eine unmittelbare Zerstörung der Dichtfunktion erfolgen. Im ersteren Fall bestimmt, aber auch im zweiten Fall ist dank der Druckentlastungsöffnung gewährleistet, dass die Fehlfunktion des drucktragenden Dichtungselements 5b zu keinem übermässigen Druckaufbau im inneren Volumen der Steckverbindung 4d führt. Insbesondere bei kleinem steckerinternen Volumen 4d würde sich ansonst in kurzer Zeit der Druck des eigentlichen Druckbehälters einstellen, unter der Voraussetzung, dass das Gehäuse 4 der Steckverbindung dem internen Druck standhalten kann.

Die Leitungsdurchführung 1, insbesondere ausgestaltet als Steckverbindung, umfasst ein interne Volumen 4d, welches fluidtechnisch einen Auslass aufweist und insbesondere an die Umgebung angeschlossen ist. Hierdurch ist sichergestellt, dass das innere Volumen der Steckverbindung bei defektem Dichtelement 5b nicht permanent druckbeaufschlagt bleibt. In Abhängigkeit der Öffnungsgrösse zur Umgebung und der Leckage des primären Dichtungselements 5b wird sich jedoch im innern Volumen 4d ein entsprechender Druck einstellen. Diese Leckage kann mittels Sensoren, beispielsweise einem Drucksensor oder Gasdetektor, überwacht werden und gegebenenfalls auch ein Alarm ausgelöst werden.

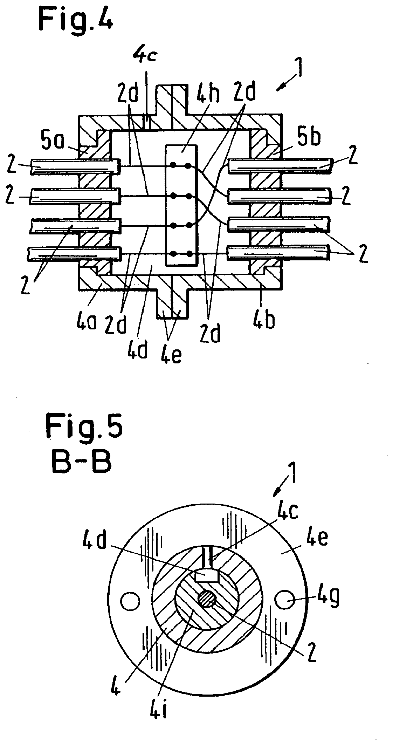

Figur 4 zeigt schematisch ein Gehäuse 4, welches aus zwei miteinander gasdicht verschraubten Gehäuseteilen 4a, 4b besteht. Das Gehäuseteil 4a umfasst eine Druckentlastungsöffnung 4c. Jedes Gehäuseteil 4a bzw. 4b umfasst je eine Dichtung 5a bzw. 5b, durch welche je vier starre Leiter 2 verlaufen. Innerhalb des Gehäuses 4 sind die starren Leiter 2 mit flexiblen Leiter 2d verbunden. Innerhalb des Gehäuses 4 ist eine Verbindungsvorrichtung 4h angeordnet, um die flexiblen Leiter 2d zu verbinden oder falls erforderlich auch wieder zu trennen. In einer bevorzugten Ausgestaltung sind die flexiblen Leiter 2d aus Litzendraht gefertigt, und die Verbindungsvorrichtung 4h ist als Klemmschiene ausgestaltet, sodass die flexiblen Leiter 2d mit Hilfe von Schrauben an der Verbindungsvorrichtung 4h befestigbar sind, und zudem zwischen vorzugsweise je zwei Leiter 2d ein gegenseitiger elektrischer Kontakt gebildet wird. Die Leiter 2d könnten jedoch beispielsweise auch als Lichtwellenleiter ausgestaltet sein.

Figur 5 zeigt mit einem Schnitt entlang der in Figur 1 dargestellten Linie B-B ein weiteres Ausführungsbeispiel einer Leitungsdurchführung 1. Der in Figur 1 dargestellte Innenhohlraum 4d ist im Ausführungsbeispiel gemäss Figur 5 teilweise mit einem Füllmaterial wie einem Isolator 4i gefüllt, sodass sich der Innenhohlraum 4d wie in Figur 5 dargestellt verkleinert. Der Innenhohlraum 4d gewährleistet eine fluidleitende Verbindung entlang des Raumes zwischen der ersten und zweiten Dichtung 5a, 5b sowie der Druckentlastungsöffnung 4c. Der Isolator 4i ist vorzugsweise als elektrischer Isolator ausgestaltet und kann auf unterschiedlichste Weise mit Innenhohlräumen 4d zum Leiten des Fluides versehen sein. Der Isolator 4i besteht vorzugsweise aus einem Festkörper. Als Isolator 4i könnte jedoch auch eine Flüssigkeit verwendet werden, beispielsweise Oel, welche den Innenhohlraum 4d teilweise füllt.

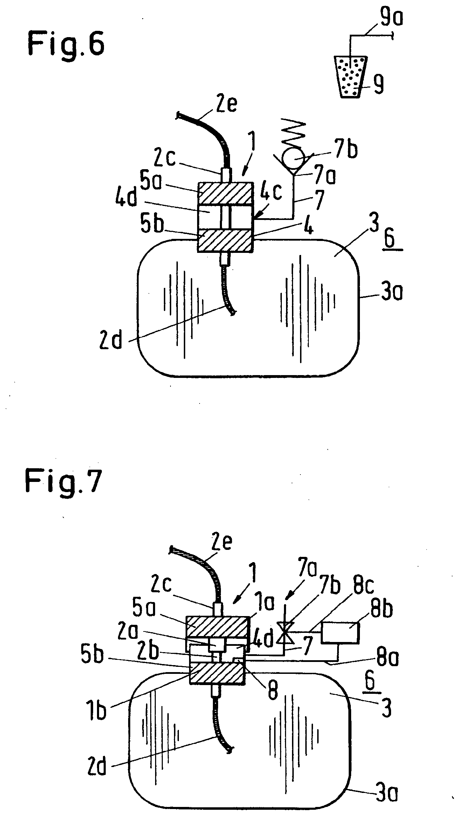

Figur 6 zeigt schematisch ein Druckgehäuse 3a mit druckbeaufschlagbarem Innenraum 3, wobei am Druckgehäuse 3a eine Leitungsdurchführung 1 angeordnet ist, welche einen elektrischen Leiter 2 fluid- beziehungsweise gasdicht vom Innenraum 3 zum Aussenraum 6 führt. Der durch die druckbelastbaren Dichtungen 5a, 5b begrenzte Innenhohlraum 4d ist über die Druckentlastungsöffnung 4c und die Leitung 7 fluidleitend mit dem Ventil 7b mit Austrittsöffnung 7a verbunden. Das Ventil 7b weist eine Feder auf, wobei das Druckniveau, bei welchem das Ventil 7b öffnet, vorzugsweise durch die Federkraft einstellbar ist. Im Aussenraum 6 ist ein Gassensor 9 mit elektrischer Leitung 9a angeordnet. Der Gassensor 9 ist in der Lage das aus dem Ventil 7b austretende Gas zu erkennen. Im dargestellten Ausführungsbeispiel sind die Leiter 2d, 2e als flexible, metallische Leiter ausgestaltet, beispielsweise als Litzenleiter. Diese Leiter 2d, 2e sind mit dem stabförmigen, metallischen Leiter 2 elektrisch leitend verbunden.

Das Druckgehäuse 3a könnte als Druckgehäuse eines Turbokompressors, umfassend einen Turboverdichter sowie einen Elektromotor, ausgestaltet sein. Die fluidleitenden Ein- und Austritte des Turbokompressors sind nicht dargestellt. Zur Energieversorgung des Elektromotors wären eine Mehrzahl der in Figur 1 dargestellten Leitungsdurchführungen 1 am Druckgehäuse 3a anzuordnen, um den Elektromotor mit einer Energie von beispielsweise 1 Megawatt zu versorgen. Zur Ansteuerung oder Regelung des Turbokompressors wären zudem beispielsweise ein Lichtwellenleiter oder eine Mehrzahl von Leitungen erforderlich, welche Signale im Bereich bis zu wenigen Volt übertragen. Derartige Steuerleitungen könnten, wie beispielsweise in Figur 3 dargestellt, über eine als Steckverbindung ausgestaltete Leitungsdurchführung 1 umfassend eine Mehrzahl individueller Leiter 2b zugeführt sein.

Figur 7 zeigt schematisch wiederum ein Druckgehäuse 3a mit druckbeaufschlagbarem Raum 3, wobei die Leitungsdurchführung 1 als Steckverbindung mit erstem und zweitem Steckverbindungsteil 1a, 1b ausgestaltet ist. Im Innenhohlraum 4d der Leitungsdurchführung 1 ist ein Sensor 8 angeordnet. Dieser Sensor 8 kann aber auch ausserhalb der Steckverbindung 1 angeordnet sein, beispielsweise in dem der Sensor 8 über eine Fluid leitende Verbindung mit dem im Innenhohlraum 4d anliegenden Druck verbunden ist. Der Sensor 8 könnte auch in einer Impulsleitung ausserhalb des Steckers, auf einem speziell dafür vorgesehenem Rack angeordnet sein. Die Druckentlastungsöffnung 4c ist über eine Fluidleitung 7 und ein Ventil 7b mit der Austrittsöffnung 7a verbunden. Das Ventil 7b könnte auch innerhalb der Druckentlastungsöffnung 4c angeordnet sein. Eine Überwachungsvorrichtung 8b erfasst den Wert des Sensors 8, beispielsweise ein Drucksensor oder ein Gasfühler, über die elektrische Leitung 8a, und regelt das Ventil 7b über die elektrische Leitung 8c. Das Ventil 7b wird beispielsweise beim Überschreiten eines vorgebbaren, im Innenhohlraum 4d anstehenden Druckes geöffnet. Die Leitungsdurchführung 1 kann als Starkstrom-Steckverbindung ausgestaltet sein, und zur Übertragung von elektrischer Energie im Beriech von kA und kV ausgelegt sein. Die Leitungsdurchführung 1 kann jedoch auch eine oder eine Vielzahl von Steckverbindungen aufweisen, und zur Übertragung von elektrischen Signalen im Beriech von mV bis V oder mA bis A ausgelegt sein. Die erfindungsgemässen Leitungsdurchführungen 1 können in unterschiedlichsten Formen gebaut werden. Insbesondere bei deren Ausgestaltung als Steckverbindung kann das zweite Steckverbindungsteil 1b auch derart ausgestaltet sein, dass ein handelsübliches, normiertes erstes Steckverbindungsteil 1a einführbar ist. Die in Figur 7 dargestellte Steckverbindung weist vorzugsweise einen nicht dargestellten Dichtungsring auf, welcher den Spalt zwischen dem ersten und zweiten Steckverbindungsteil 1a, 1b abdichtet, damit der Innenhohlraum 4d bezüglich dem Aussenraum 6 fluiddicht ist.

Die in den Figuren 1 und 2 dargestellte Leitungsdurchführung 1 ist vorzugsweise als Einbauteil ausgestaltet, welches an einem Druckgehäuse 3a befestigt wird. Die Leitungsdurchführung 1 kann auf unterschiedliche Weise mit dem Druckgehäuse 3a verbunden werden, so auch durch Schweissen, chemisches Schweissen oder Löten. Das Gehäuse 4 der Leitungsdurchführung 1 kann beispielsweise aus Metall oder Kunststoff bestehen. Beispielsweise kann auch das erste Steckverbindungsteil 1a aus Metall und das zweite Steckverbindungsteil 1b aus einem anderen Material wie Kunststoff bestehen.

Die Druckentlastungsöffnung 4c kann eine derartige geometrische Ausgestaltung aufweisen, dass dadurch eine zusätzliche Wirkung auf das ausströmende Fluid ausgeübt wird, zum Beispiel dass dem durch die Druckentlastungsöffnung 3c strömenden Fluid in erhöhtem Masse Wärme entzogen wird. Beispielsweise könnte die Druckentlastungsöffnung 4c als lange, dünne Bohrung oder Spalt ausgestaltet sein, welche die Aufgabe hat das ausströmende Fluid oder Gas abzukühlen, sodass das aus der Druckentlastungsöffnung 4c austretende Gas eine reduzierte Temperatur aufweist. Dies kann sich als Vorteilhaft erweisen, falls die Gefahr einer Deflagration, auch Verpuffung benannt, besteht. Falls im Innenhohlraum 4d ein derartiger, schneller Verbrennungsvorgang auftreten sollte, so würden die dabei erzeugten heissen Gase beim Passieren der Druckentlastungsöffnung 4c zusätzlich abgekühlt werden, sodass die austretenden Gase eine entsprechend reduzierte bzw. niedere Temperatur aufweisen.

Die erfindungsgemässe Leitungsdurchführung ist insbesondere zum Einsatz auf über Wasser angeordneten Plattformen, insbesondere für Plattformen zur Erdölförderung geeignet.

## Patentansprüche

1. Druckbeaufschlagbare Vorrichtung umfassend einen Druckbehälter (3a) mit einem druckbeaufschlagbaren Raum (3), sowie umfassend eine fluiddichte Leitungsdurchführung (1) zum Zuführen eines Leiters (2) in den druckbeaufschlagbaren Raum (3), wobei die fluiddichte Leitungsdurchführung (1) ein Gehäuse (4) umfasst, zumindest einen Leiter (2) sowie eine erste und eine zweite druckbelastbare Dichtung (5a, 5b), wobei die zwei druckbelastbaren Dichtungen (5a, 5b) und das Gehäuse (4) einen Innenhohlraum (4d) begrenzen, wobei der Leiter (2) über die erste Dichtung (5a) in den Innenhohlraum (4d) eintritt, durch den Innenhohlraum (4d) verläuft, und über die zweite Dichtung (5b) aus dem Innenhohlraum (4d) austritt, und wobei die zweite Dichtung (5b) zum druckbeaufschlagbaren Raum (3) hin angeordnet ist, **dadurch gekennzeichnet, dass** der Innenhohlraum (4d) eine nicht verschlossene, permanent fluid- oder gasdurchlässige Druckentlastungsöffnung (4c) aufweist, welche in einen Aussenraum (6) mündet, der sich ausserhalb des druckbeaufschlagbaren Raumes (3) befindet, um in den Innenhohlraum (4d) einströmendes Fluid über die Druckentlastungsöffnung (4c) an den Aussenraum (6) abzugeben.

2. Druckbeaufschlagbare Vorrichtung nach Anspruch 1, **dadurch gekennzeichnet, dass** diese als Steckverbindung ausgestaltet ist, wobei das Gehäuse (4) ein erstes und zweites Gehäuseteil (4a, 4b) umfasst, welche lösbar verbindbar sind, und wobei der Leiter (2) ein erstes Verbindungsteil (2a) und ein zweites Verbindungsteil (2b) umfasst, welche derart ausgestaltet und angeordnet sind, dass die Steckverbindung im zusammengesteckten Zustand innerhalb des Gehäuses (4) eine leitende Verbindung zwischen dem ersten und zweiten Verbindungsteil (2a, 2b) aufweist.

3. Druckbeaufschlagbare Vorrichtung nach Anspruch 1, **dadurch gekennzeichnet, dass** innerhalb des Gehäuses (4) eine Verbindungsvorrichtung (4h) angeordnet ist, welche den Leiter (2) zu verbinden und/oder zu trennen erlaubt.

4. Druckbeaufschlagbare Vorrichtung nach Anspruch 3, **dadurch gekennzeichnet, dass** der Leiter (2) innerhalb des Gehäuses (4) flexible ausgestaltet ist.

5. Druckbeaufschlagbare Vorrichtung nach einem der Ansprüche 3 bis 4, **dadurch gekennzeichnet, dass** die Verbindungsvorrichtung (4h) derart ausgestaltet ist, dass eine Mehrzahl von Leitern (2) gegenseitig verbindbar sind.

6. Druckbeaufschlagbare Vorrichtung nach einem der vorhergehenden Ansprüche, **dadurch gekennzeichnet, dass** der Leiter (2) ein elektrischer Leiter ist.

7. Druckbeaufschlagbare Vorrichtung nach Anspruch 6, **dadurch gekennzeichnet, dass** die erste und zweite Dichtung (5a, 5b) einen elektrischen Isolator umfasst, durch welchen der Leiter (2) verläuft.

8. Druckbeaufschlagbare Vorrichtung nach Anspruch 6, **dadurch gekennzeichnet, dass** der Leiter (2) aus Metall besteht.

9. Druckbeaufschlagbare Vorrichtung nach einem der Ansprüche 6 bis 8, **dadurch gekennzeichnet, dass** der Leiter (2) stabförmig ausgestaltet ist.

10. Druckbeaufschlagbare Vorrichtung nach einem der vorhergehenden Ansprüche, **dadurch gekennzeichnet, dass** ein Sensor (8) derart angeordnet ist, dass dieser zumindest den im Innenhohlraum (4a) anliegenden Druck überwachen kann.

11. Druckbeaufschlagbare Vorrichtung nach einem der vorhergehenden Ansprüche, **dadurch gekennzeichnet, dass** die Druckentlastungsöffnung (4c) Fluid leitend mit einem Ventil (7) verbunden ist, und dass das Ventil (7) Fluid leitend mit einer Austrittsöffnung (7a) verbunden ist, welche in den Aussenraum (6) mündet.

12. Druckbeaufschlagbare Vorrichtung nach einem der Ansprüche 1 bis 10, **dadurch gekennzeichnet, dass** ein Ventil (7) in der Druckentlastungsöffnung (4c) angeordnet ist, und dass das Ventil (7) Fluid leitend mit dem Aussenraum (6) verbunden ist.

13. Druckbeaufschlagbare Vorrichtung nach Anspruch 11 oder 12, **dadurch gekennzeichnet, dass** das Ventil (7) ansteuerbar ist.

14. Druckbeaufschlagbare Vorrichtung nach einem der Ansprüche 2 bis 13, **dadurch gekennzeichnet, dass** diese eine Mehrzahl von verbindbaren Leitern (2) aufweist.

15. Druckbeaufschlagbare Vorrichtung nach einem der vorhergehenden Ansprüche mit Ausnahme von Anspruch 6, **dadurch gekennzeichnet, dass** der Leiter (2) aus einem Lichtwellenleiter besteht oder einen Lichtwellenleiter umfasst.

16. Druckbeaufschlagbare Vorrichtung nach einem der vorhergehenden Ansprüche, **dadurch gekennzeichnet, dass** der Innenhohlraum (4d) teilweise mit einem flüssigen oder festen Isolator (4i) ausgefüllt ist.

17. Druckbeaufschlagbare Vorrichtung nach einem der vorhergehenden Ansprüche, **dadurch gekennzeichnet, dass** die Druckentlastungsöffnung (4c) derart geometrisch ausgestaltet ist, dass einem durch die Druckentlastungsöffnung (4c) strömenden Fluid Wärme entzogen wird.

## Claims

1. A pressurisable device comprising a pressure vessel (3a) with a pressurisable space (3), and comprising a fluid-tight cable feed-through (1) for feeding a conductor (2) into the pressurisable space (3), wherein the fluid-tight cable feed-through (1) comprises a housing (4), at least one conductor (2) and a first and second pressurisable seal (5a, 5b), wherein the two pressurisable seals (5a, 5b) and the housing (4) delimit an interior hollow space (4d), wherein the conductor (2) enters the interior hollow space (4d) via the first seal (5a), runs through the interior hollow space (4d) and exits the interior hollow space (4d) via the second seal (5b), and wherein the second seal (5b) is arranged towards the pressurisable space (3), **characterized in that** the interior hollow space (4d) comprises a permanently fluid or gas-permeable pressure relief opening (4c) that is not closed, which opens into an exterior space (6), which is located outside the pressurisable space (3), in order to discharge fluid flowing into the interior hollow space (4d) into the exterior space (6) via the pressure relief opening (4c).

2. The pressurisable device according to Claim 1, **characterized in that** the same is configured as a plug connection, wherein the housing (4) comprises a first and second housing part (4a, 4b), which are detachably connectable, and wherein the conductor (2) comprises a first connecting part (2a) and a second connecting part (2b) which are configured and arranged in such a manner that the plug connection in the plugged-together state within the housing (4) comprises a conductive connection between the first and second connecting part (2a, 2b).

3. The pressurisable device according to Claim 1, **characterized in that** within the housing (4) a connecting device (4h) is arranged which allows connecting and/or disconnecting the conductor (2).

4. The pressurisable device according to Claim 3, **characterized in that** the conductor (2) within the housing (4) is configured flexibly.

5. The pressurisable device arrangement according to any one of the Claims 3 to 4, **characterized in that** the connecting device (4h) is configured in such a manner that a plurality of conductors (2) are mutually connectable.

6. The pressurisable device according to any one of the preceding claims, **characterized in that** the conductor (2) is an electrical conductor.

7. The pressurisable device according to Claim 6, **characterized in that** the first and second seal (5a, 5b) comprises an electrical insulator through which the conductor (2) runs.

8. The pressurisable device according to Claim 6, **characterized in that** the conductor (2) consists of metal.

9. The pressurisable device according to any one of the Claims 6 to 8, **characterized in that** the conductor (2) is configured rod-shaped.

10. The pressurisable device according to any one of the preceding claims, **characterized in that** a sensor (8) is arranged in such a manner that the same can monitor at least the pressure that is present in the interior hollow space (4a).

11. The pressurisable device according to any one of the preceding claims, **characterized in that** the pressure relief opening (4c) is fluid-conductively connected with a valve (7), and that the valve (7) is fluid-conductively connected with an outlet opening (7a), which opens in the exterior space (6).

12. The pressurisable device according to any one of the Claims 1 to 10, **characterized in that** a valve (7) is arranged in the pressure relief opening (4c) and **in that** the valve (7) is fluid-conductively connected with the exterior space (6).

13. The pressurisable device according to Claim 11 or 12, **characterized in that** the valve (7) is controllable.

14. The pressurisable device according to any one of the Claims 2 to 13, **characterized in that** the same comprises a plurality of connectable conductors (2).

15. The pressurisable device according to any one of the preceding claims with the exception of Claim 6, **characterized in that** the conductor (2) consists of a fibre-optic cable or comprises a fibre-optic cable.

16. The pressurisable device according to any one of the preceding claims, **characterized in that** the interior hollow space (4d) is partly filled out with a liquid or solid insulator (4i).

17. The pressurisable device according to any one of the preceding claims, **characterized in that** the pressure relief opening (4c) is geometrically configured in such a manner that heat is extracted from a fluid flowing through the pressure relief opening (4c).

## Revendications

1. Dispositif pouvant être sollicité par une pression comprenant un récipient sous pression (3a) avec un espace pouvant être sollicité par une pression (3) ainsi que comprenant un passage de câble étanche aux fluides (1) pour introduire une ligne (2) dans l'espace pouvant être sollicité par une pression (3), dans lequel le passage de câble étanche aux fluides (1) comprend un logement (4), au moins une ligne (2) ainsi qu'un premier et un deuxième joint d'étanchéité pouvant être sollicité par une pression (5a,5b), dans lequel les deux joints d'étanchéité pouvant être sollicités par une pression (5a,5b) et le logement (4) délimitent un espace intérieur creux (4d), dans lequel la ligne (2) entre par l'intermédiaire du premier joint d'étanchéité (5a) dans l'espace intérieur creux (4d), s'étend à travers l'espace intérieur creux (4d) et ressort par l'intermédiaire du deuxième joint d'étanchéité (5b) hors de l'espace intérieur creux (4d), et dans lequel le deuxième joint d'étanchéité (5b) est disposé dans la direction de l'espace pouvant être sollicité par une pression (3), **caractérisé en ce que** l'espace intérieur creux (4d) présente une ouverture de décompression (4c) fermées, perméable aux fluides ou aux gaz de manière permanente, qui débouche dans un espace extérieur (6), qui se trouve à l'extérieur de l'espace pouvant être sollicité par une pression (3), afin de délivrer le fluide s'écoulant dans l'espace intérieur creux (4d) par l'intermédiaire de l'ouverture de décompression (4c) dans l'espace extérieur (6).

2. Dispositif pouvant être sollicité par une pression selon la revendication 1, **caractérisé en ce que** celui-ci est conçu comme une liaison enfichable, dans lequel le logement (4) comprend une première et deuxième partie de logement (4a,4b), qui peuvent être reliées de manière amovible et dans lequel la ligne (2) comprend une première partie de liaison (2a) et une deuxième partie de liaison (2b), qui sont conçues et disposées de telle sorte que la liaison enfichable en l'état assemblé à l'intérieur du logement (4) présente une liaison conductrice entre la première et la deuxième partie de liaison (2a,2b).

3. Dispositif pouvant être sollicité par une pression selon la revendication 1, **caractérisé en ce que** à l'intérieur du logement (4) est disposé un dispositif de liaison (4h), qui permet de relier et/ou séparer la ligne (2).

4. Dispositif pouvant être sollicité par une pression selon la revendication 3, **caractérisé en ce que** la ligne (2) est réalisée de manière flexible à l'intérieur du logement (4).

5. Dispositif pouvant être sollicité par une pression selon une des revendications 3 à 4, **caractérisé en ce que** le dispositif de liaison (4h) est réalisé de telle sorte qu'une pluralité de lignes (2) puissent être reliées mutuellement.

6. Dispositif pouvant être sollicité par une pression selon une des revendications précédentes, **caractérisé en ce que** la ligne (2) est une ligne électrique.

7. Dispositif pouvant être sollicité par une pression selon la revendication 6, **caractérisé en ce que** le premier et le deuxième joint d'étanchéité (5a,5b) comprennent un isolant électrique, à travers lequel s'étend la ligne (2).

8. Dispositif pouvant être sollicité par une pression selon la revendication 6, **caractérisé en ce que** la ligne (2) est constituée de métal.

9. Dispositif pouvant être sollicité par une pression selon une des revendications 6 à 8, **caractérisé en ce que** la ligne (2) est réalisée en forme de barre.

10. Dispositif pouvant être sollicité par une pression selon une des revendications précédentes, **caractérisé en ce que** un capteur (8) est disposé de telle sorte que celui-ci puisse surveiller au moins la pression prédominante dans l'espace intérieur creux (4a).

11. Dispositif pouvant être sollicité par une pression selon une des revendications précédentes, **caractérisé en ce que** l'ouverture de décompression (4c) est reliée de manière conductrice de fluide avec une soupape (7) et **en ce que** la soupape (7) est reliée de manière conductrice de fluide avec une ouverture de sortie (7a), qui débouche dans l'espace extérieur (6).

12. Dispositif pouvant être sollicité par une pression selon une des revendications 1 à 10, **caractérisé en ce que** une soupape (7) est disposée dans l'ouverture de décompression (4c) et **en ce que** la soupape (7) est reliée de manière conductrice de fluide avec l'espace extérieur (6).

13. Dispositif pouvant être sollicité par une pression selon la revendication 11 ou 12, **caractérisé en ce que** la soupape (7) peut être commandée.

14. Dispositif pouvant être sollicité par une pression selon une des revendications 2 à 13, **caractérisé en ce que** celui-ci présente une pluralité de lignes (2) pouvant être reliées.

15. Dispositif pouvant être sollicité par une pression selon une des revendications précédentes à l'exception de la revendication 6, **caractérisé en ce que** la ligne (2) est constituée d'une fibre optique ou comprend une fibre optique.

16. Dispositif pouvant être sollicité par une pression selon une des revendications précédentes, **caractérisé en ce que** l'espace intérieur creux (4d) est rempli partiellement avec un isolant liquide ou solide (4i).

17. Dispositif pouvant être sollicité par une pression selon une des revendications précédentes, **caractérisé en ce que** l'ouverture de décompression (4c) a une configuration géométrique telle que de la chaleur puisse être extraite d'un fluide sec coulant à travers l'ouverture de décompression (4c).
